# EUROPÄISCHE PATENTSCHRIFT

(11) **EP 1 213 806 B1**
(45) Veröffentlichungstag und Bekanntmachung des Hinweises auf die Patenterteilung: **04.06.2008**
(21) Anmeldenummer: 01128373.6
(22) Anmeldetag: 03.12.2001
(51) Int. Cl.: H02B 5/00

(54) **Hochspannungs-Schaltanlage, Doppelsammelschienen-Trennschalter und Schaltgerät**
High voltage switchgear, duplicate busbar isolator switch and switch apparatus
Installation de commutation haute-tension, sectionneur pour jeu de barres double et appareil de commutation

(30) Priorität: 08.12.2000 DE 10061002
(43) Veröffentlichungstag der Anmeldung: 12.06.2002
(73) Patentinhaber: AREVA T&D SA, 92084 Paris La Défense Cedex (FR)
(72) Erfinder: Dartenne, Edgar, Dipl.-Ing., 01723 Grumbach (DE); Rentz, Friedrich, Ing., 68723 Schwetzingen (DE)
(74) Vertreter: Dreiss, Fuhlendorf, Steimle & Becker

(56) Entgegenhaltungen:
- DE-U- 8 019 276

## Beschreibung

Die Erfindung betrifft eine Hochspannungs-Schaltanlage nach dem Oberbegriff des Anspruchs 1 sowie dafür vorgesehene Trennschalter und ein damit ausgestattetes Schaltgerät nach dem Oberbegriff des nebengeordneten Anspruchs (siehe DE-U-8 019 276).

In Hochspannungs-Schaltanlagen für Spannungen ab 1 kV, insbesondere in Freiluft-Schaltanlagen, werden Schaltgeräte mit Trennschaltern verschiedenster Bauart eingesetzt, um stromführende Leitungen von Anlagenteilen zu trennen. Üblicherweise werden die an- und abgehenden Stromleitungen über diese Trennschalter sowie andere Schaltgeräte mit einer Sammelschiene verbunden, die in der Schalteanlage den energiemäßigen Knotenpunkt bildet. Bei den üblichen Schaltanlagen für dreiphasige Wechselstromsysteme ("Drehstrom") besteht diese Sammelschiene aus drei Stromleitern, die von Isolatoren und einer Tragkonstruktion in ihrer örtlichen Lage fixiert werden. Bei zweipoligen Stromsystemen sind es entsprechend zwei parallele Sammelschienenleiter (z.B. bei Gleichstromanlagen).

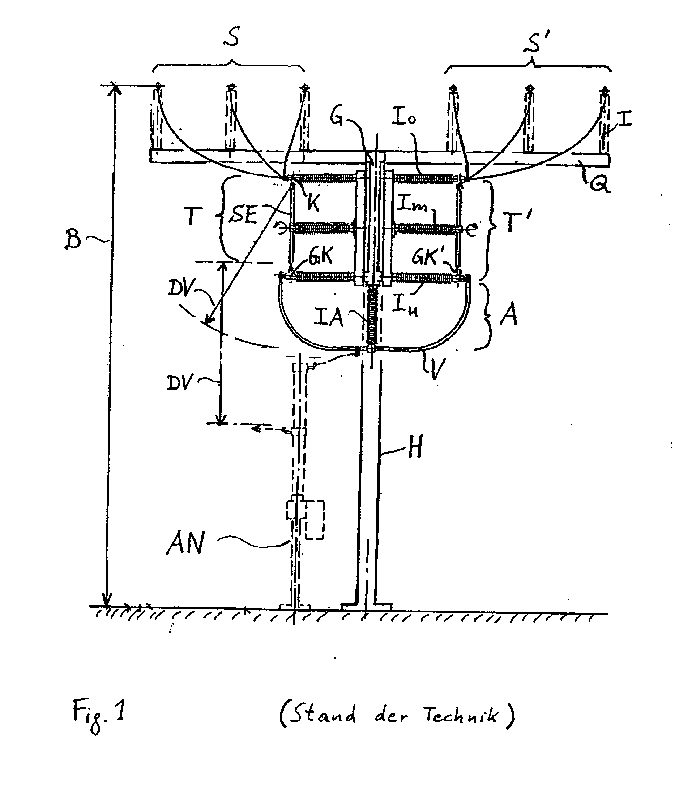

Es sind ebenfalls Schaltanlagen mit zwei Sammelschienen bekannt, bei denen die beiden Sammelschienen zusammen mit zwei Trennschaltern auf einer Trägerkonstruktion montiert sind, die häufig aus einem vertikal aufgestellten Hauptstützträger und aus einem darauf montierten Querträger besteht. Diese Schaltanlagen werden auch als Doppelsammelschienenanlagen in (klassischer) Hochbauweise bezeichnet. Dieser Anlagentyp ist z.B. in älteren luftisolierten Innenraumanlagen anzutreffen. Die beiliegende Figur 1 zeigt die typische Konstruktion einer solchen herkömmlichen Schaltanlage:

Der vertikale Hauptstützträger H ist bei Spannungsebenen von 36 bis 245 kV üblicherweise zwischen 4 und 12 m lang und trägt an seinem oberen Ende einen ebenfalls etwa 4 bis 14 m langen Querträger Q, der waagerecht und mittig auf dem Hauptstützträger H montiert ist. Auf der linken und rechten Hälfte des Querträgers Q ist jeweils eine mit drei Stromleitern (bei Drehstrom) versehene Sammelschiene S bzw. S' angebracht. Jeder Stromleiter wird von einem senkrecht montiertem Isolierkörper I, auch kurz Isolator genannt, getragen. An dem Hauptstützträger H ist unterhalb des Querträgers ein Grundrahmen G mit zwei darauf montierten Trennschaltern T und T' angebracht. Bekanntermaßen werden häufig, so wie es die Figur 1 zeigt, Dreisäulen-Drehtrennschalter verwendet, die jeweils drei Isolatoren aufweisen, nämlich einen oberen, einen mittleren und einen unteren Isolator Io, Im bzw. Iu. Wie in der Figur 1 zu sehen ist, sind die Isolatoren der Trennschalter T und T' rücklings zueinander auf dem Grundrahmen G in waagerechter Ausrichtung montiert. Die Trennschalter T und T' sind also spiegelbildlich zueinander angeordnet. Von den oberen Isolatoren Io gehen Verbindungsleitungen zu den Stromschienen S und S'. Die mittleren Isolatoren Im tragen jeweils das bewegliche Schaltelement SE oder SE' des entsprechenden Trennschalters T bzw. T'. Die unteren Isolatoren Iu sind mit einem gemeinsamen Abgangsanschluß A verbunden. Dieser besteht aus einem Verbindungselement V, das an einem senkrecht am unteren Ende des Grundrahmens G angebrachten Isolator IA montiert ist, der auch als Mittelkontaktstützer bezeichnet wird. Als Verbindungselement V wird z.B. ein gebogenes Metallrohr verwendet. Es ist auch bekannt, stromleitende Seile oder Kabel zu verwenden. Über den gemeinsamen Abgangsanschluß A werden beide Trennschalter T und T' mit den am Boden befindlichen, d.h. mit den nicht auf der Trägerkonstruktion angeordneten, anderen Anlageteilen AN verbunden. Alle stromführenden Teile der Schaltanlage befinden sich mindestens um einen definierten Sicherheitsabstand DV entfernt von den Anlageteilen AN.

Bei den herkömmlichen Trennschaltern, so auch bei den in der Figur 1 dargestellten Sammelschienen-Trennschaltern T unf T', wird die Schaltung dadurch hergestellt, dass das bewegliche Schaltelement, wie z.B. das in der Figur 1 gezeigte drehbar gelagerte, stromleitende Metallteil SE, mit zwei Schaltkontakten kontaktiert. Der erste Schaltkontakt K ist an dem oberen Isolator Io angeordnet zum Stromschluß mit einer der Stromschienen. Der zweite Schaltkontakt GK ist an dem unteren Isolator Iu angeordnet zum Stromschluß mit dem Verbindungselement V des gemeinsamen Abgangsabschlusses A. Der zweite Schaltkontakt GK entspricht damit dem Gegenkontakt zu dem ersten Schaltkontakt K.

Es sind also bereits Hochspannungs-Schaltanlagen mit mindestens zwei Trennschaltern bekannt, die auf einer Trägerkonstruktion für Sammelschienen angeordnet sind und die jeweils ein bewegliches Schaltelement und einen damit direkt kontaktierenden ersten Schaltkontakt aufweisen zum Stromschluss mit einer der Sammelschienen, und mit einem gemeinsamen Hochspannungs-Abgangsanschluss, der ein stromleitendes Verbindungselement aufweist, das die mindestens zwei Trennschalter mit nicht auf der Trägerkonstruktion angeordneten Anlageteilen verbindet.

Die herkömmliche aus Stromschienen, Trennschaltern und Abgangsanschluss gebildete Konstruktion ist jedoch materialaufwendig und führt zu Schaltgeräten und -anlagen, die recht groß und besonders hoch sind. Das wiederum verteuert die Konstruktion, Herstellung sowie den Aufbau von solchen Schaltanlagen, wobei auch die Kosten für die Errichtung eines Fundamentes für die Trägerkonstruktion usw. zu berücksichtigen sind.

Es ist daher Aufgabe der Erfindung, diese Nachteile zu überwinden und die eingangs genannte Hochspannungs-Schaltanlage konstruktiv deutlich zu verbessern. Außerdem sollen ein deutlich verbesserter Trennschalter und ein damit ausgestattetes Schaltgerät für eine solche Schaltanlage vorgeschlagen werden.

Gelöst wird die Aufgabe durch eine Hochspannungs-Schaltanlage mit den Merkmalen des Anspruch 1 sowie durch einen Trennschalter bzw. ein Schaltgerät mit den Merkmalen der Ansprüche 9 bzw. 11.

Demnach ist zumindest ein Endstück des Verbindungselements in der Form von zweiten Schaltkontakten ausgebildet, die als Gegenkontakte zu den ersten Schaltkontakten wirken und die zum Stromschluss mit dem gemeinsamen Hochspannungs-Abgangsanschluss die beweglichen Schaltelemente der Trennschalter direkt kontaktieren.

Damit wird eine sehr kompakte Konstruktion vorgeschlagen, die mit weniger Material auskommt ohne Funktion und Sicherheit einzuschränken. Dies hat neben einer Reduzierung der Anzahl der erforderlichen Bauelemente und damit der Reduzierung von Kosten zahlreiche weitere Vorteile. Unter anderem kann eine deutlich niedrigere Schaltanlage gebaut werden, was wiederum die Dimensionierung und Montage der Trägerkonstruktion erleichtert und kostengünstiger macht. Zudem wird durch die Errichtung von neuen Schaltanlagen der optische Eindruck im Gelände gegenüber den alten Konstruktionen verbessert. Bei der vorgeschlagenen neue Konstruktion können ohne Einschränkung der Funktion die beiden Trennstrecken mit Einzelantrieben oder mit einem gemeinsamen, gegenläufig arbeitenden Antrieb versehen werden. Weiterhin ist auf der Seite der Sammelschienen der Anbau von mechanischen, motor- oder handbetriebenen Erdungsschaltern möglich.

Es werden auch ein erfindungsgemäßer Trennschalter und ein damit ausgestattetes Schaltgerät vorgeschlagen, bei dem ein Endstück des Verbindungselements in der Form eines zweiten Schaltkontaktes ausgebildet ist, der als Gegenkontakte zu dem ersten Schaltkontakt wirkt und der zum Stromschluss mit dem gemeinsamen Hochspannungs-Abgangsanschluss das bewegliche Schaltelement des Trennschalters direkt kontaktiert.

Besonders vorteilhafte Ausgestaltungen der Erfindung sind den Unteransprüchen zu entnehmen.

Demnach ist es besonders vorteilhaft, wenn das Verbindungselement starr ist und aus einem Stromleiterprofil gebildet ist, dessen beiden Endstücke als zweite Schaltkontakte geformt sind zum direkten Kontaktieren mit den beweglichen Schaltelementen der Trennschalter oder an den Enden des Verbindungselementes angebaute Kontaktsysteme vorhanden sind. Im Zusammenhang mit dieser Anordnung der Trennschalter "Rücken an Rücken" ist es von besonderem Vorteil, wenn jeder der Trennschalter ein Drehtrennschalter ist, der nur mit zwei Isolierkörperen an der Trägerkonstruktion befestigt ist, wobei der eine Isolierkörper das bewegliche Schaltelement und der andere Isolierkörper den ersten Schaltkontakt des jeweiligen Drehtrennschalters trägt, und wenn der Hochspannungs-Abgangsanschluss an der Trägerkonstruktion mittels eines Isolierkörpers befestigt ist, der das starre Verbindungselement und auch die zweiten Schaltkontakte für die Trennschalter trägt. Dadurch wird eine sehr kompakte Integration von Trennschalter und Abgangsanschluss erreicht, bei der zwei Isolatoren weniger benötigt werden. Zudem reduziert sich die Bauhöhe der Hochspannungs-Schaltanlage z.B. bei Spannungsebene 110/123 kV um 2 Meter auf etwa 8 Meter. Das entspricht einer Reduktion um etwa 20% der üblichen Bauhöhe.

Auch ist es besonders vorteilhaft, wenn der Hochspannungs-Abgangsanschluss aus zwei gegensinnig zueinander angeordneten und an der Trägerkonstruktion befestigten Isolierkörpern besteht, durch die das Verbindungselement von dem Ende des einen Isolierkörpers zu dem Ende des anderen Isolierkörpers innen hindurchgeführt ist, wobei beide Enden des Verbindungselements als zweite Schaltkontakte zum direkten Kontaktieren mit den beweglichen Schaltelementen der Trennschalter ausgebildet sind, und wenn jeder der Trennschalter ein Drehtrennschalter ist, der nur mit zwei Isolierkörperen an der Trägerkonstruktion befestigt ist, wobei der eine Isolierkörper das bewegliche Schaltelement und der andere Isolierkörper den ersten Schaltkontakt des jeweiligen Drehtrennschalters trägt. Durch diese Maßnahmen wird das Verbindungselement quasi in die unteren Isolatoren der Trennschalter integriert, so dass der Mittelkontaktstützer entfallen kann. Auch reduziert sich hier die Bauhöhe bei Spannungsebene 110/123 kV deutlich um nahezu 2 Meter. Idealerweise wird die Schaltanlage so gestaltet, das die Trägerkonstruktion einen vertikal stehenden Hauptstützträger und einen darauf montierten Querträger aufweist, dass die Sammelschienen auf dem Querträger montiert sind und dass die Trennschalter jeweils rückseitig gegeneinander gerichtet auf einem Grundrahmen montiert sind, der an dem Hauptstützträger unterhalb des Querträgers montiert ist.

Es ergeben sich auch besondere Vorteile, wenn der Hochspannungs-Abgangsanschluss aus zwei gegensinnig zueinander angeordneten und an der Trägerkonstruktion befestigten Isolierkörperen besteht, durch die das Verbindungselement von dem Ende des einen Isolierkörpers zu dem Ende des anderen Isolierkörpers hindurch geführt ist, wobei ein Ende des Verbindungselements als gemeinsamer zweiter Schaltkontakt zum direkten Kontaktieren mit den beweglichen Schaltelementen der mindestens zwei Trennschalter ausgebildet ist, und dass jeder der Trennschalter ein Drehtrennschalter ist, der nur mit zwei Isolierkörpern an der Trägerkonstruktion befestigt ist, wobei der eine Isolierkörper das bewegliche Schaltelement und der andere Isolierkörper den ersten Schaltkontakt des jeweiligen Drehtrennschalters trägt. Dadurch ergibt sich eine "Kiellinien"-Anordnung der Trennschalter, der u.a. zum Einsatz in Schaltzellentrennwänden von luftisolierten Innenraumanlagen besonders gut geeignet ist. In diesem Zusammenhang ist es besonders vorteilhaft, wenn die Trägerkonstruktion zwei vertikal stehende Hauptstützträger und einen dazwischen montierten Hauptquerträger und zwei Nebenquerträger aufweist, wenn die Sammelschienen jeweils auf einem der Nebenquerträger montiert sind und wenn die Trennschalter jeweils rückseitig gegeneinander gerichtet auf einem Grundrahmen montiert sind, der waagerecht an dem Hauptquerträger montiert ist. Hierdurch wird eine stabile Konstruktion erreicht, die bei Spannungsebene 110/123 kV immerhin noch um etwa 1 Meter niedriger ist als übliche Konstruktionen.

Auf diese und auf weitere Vorteile der Erfindung, die sich besonders dann ergeben, wenn die Trennschalter Drehtrennschalter, insbesondere Mehrsäulen-Drehtrennschalter, Schwenktrennschalter oder Hebeltrennschalter, insbesondere Gelenkhebeltrennschalter, sind, wird in der nachfolgenden Beschreibung näher eingegangen.

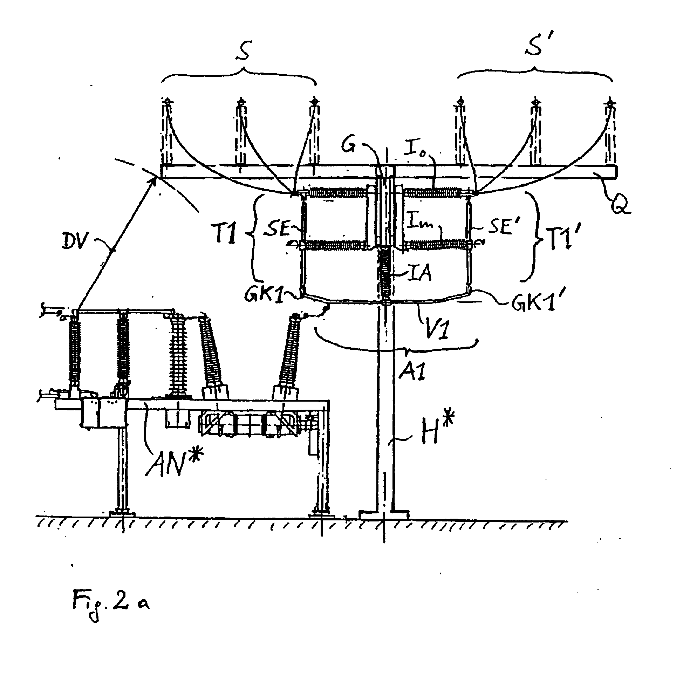

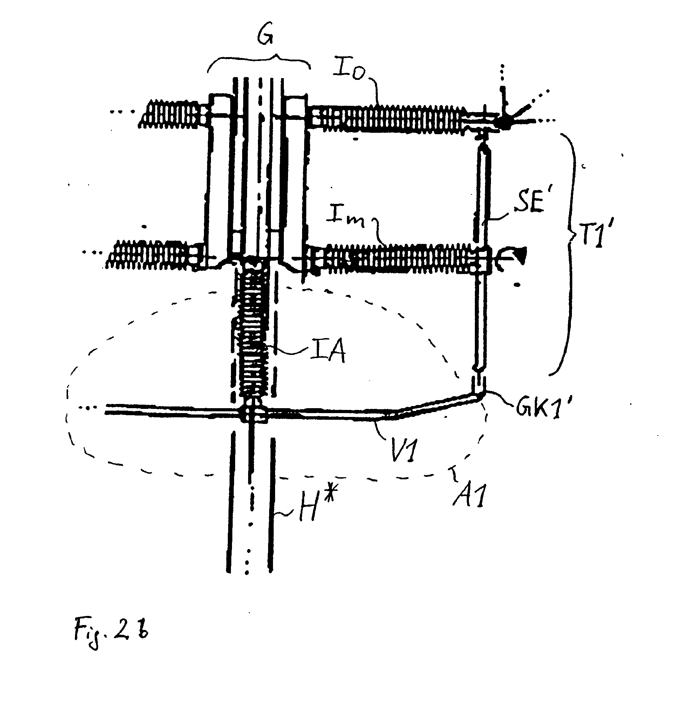

Die Erfindung wird nun näher beschrieben anhand von drei Ausführungsbeispielen, die schematisch in den beiliegenden Figuren 2a,b bis 4 dargestellt sind. Dabei wird auf die Vorteile der Erfindung deutlich eingegangen auch im Vergleich zu dem bereits anhand der Figur 1 gewürdigten Stand der Technik.

Im Einzelnen zeigen die für die nachfolgende Beschreibung verwendeten Zeichnungen also folgendes:
- Figur 1: zeigt eine aus dem Stand der Technik bekannte Schaltanlage,
- Figuren 2a und 2b: zeigen ein erstes Ausführungsbeispiel der Erfindung in der Gesamtansicht bzw. in einem Teilausschnitt,
- Figur 3: zeigt ein zweites Ausführungsbeispiel und
- Figur 4: zeigt ein drittes Ausführungsbeispiel.

Zunächst wird hier noch einmal kurz auf die in der Figur 1 gezeigte herkömmliche Schaltanlage mit zwei Trennstrecken eingegangen. Die zwei Trennschalter T und T' sind auf einer T-förmigen Trägerkonstruktion zusammen mit Sammelschienen S und S' montiert, die jeweils aus drei Vertikal auf dem Querträger Q montierten Isolatoren mit aufgelegten Stromleitern bestehen. Die Trennschalter T und T' sind mit ihren Grundrahmen bzw. den Schaltstrecken SE senkrecht unterhalb des Querträgers Q an dem Hauptstützträger H mittels eines Gestellrahmens G montiert. Jeder Trennschalter hat drei untereinander angeordnete Isolatoren Io, Im und Iu, von denen der mittlere Isolator Im ein drehbares Schaltelement SE trägt und die beiden anderen Isolatoren Io und Iu jeweils einen Schaltkontakt K bzw. GK tragen. Somit bildet jeder Trennschalter einen Dreisäulen-Drehtrennschalter, bei dem durch Drehung des Schaltelementes SE ein leitender Kontakt geschaltet und wieder getrennt werden kann. Vom Schaltkontakt K des oberen Isolators Io gehen Leitungen zu der entsprechenden Sammelschiene S. Der unteren Gegenschaltkontakte GK und GK' der beiden Trennschalter T bzw. T' sind über ein als Leiterrohr oder Seil ausgebildetes Verbindungselement V miteinander verbunden, wodurch sich ein gemeinsamer Abgangsanschluss A bildet, der wiederum die Trennschalter T und T' mit Anlagenteilen AN verbindet, die nicht auf der Trägerkonstruktion angeordnet sind und die beispielsweise einen Einsäulenleistungsschalter, einen sogenannten "Lifetank CB", umfassen. Der gemeinsame Abgangsanschluss A hat noch einen senkrecht am Gestellrahmen G montierten Isolator IA, der das Verbindungselement V trägt sowie den gemeinsamen Stromknoten von dem aus, die Verbindung zu dem Einsäulenschalter hergestellt wird.

Die in der Figur 1 dargestellte und in bekannter Bauweise errichtete Konstruktion hat bei Spannungsebene 110/123 kV z.B. eine Gesamtbauhöhe von ca. 10,8 m. Wie in der Figur 1 zu erkennen ist, benötigt die Konstruktion immerhin 7 Isolatoren zur Realisierung der Trennschalter und des gemeinsamen Abganganschlusses, wobei dieses etwas eine Bauhöhe von nahezu 4 m in Anspruch genommen wird. Demzufolge ist die herkömmliche Konstruktion sehr aufwendig und voluminös gestaltet, was wiederum die Kosten für Herstellung sowie Errichtung der Schaltanlage erhöht.

Im Gegensatz dazu zeigen die Figuren 2a,b bis 4 erfindungsgemäße Ausgestaltungen, die sehr kompakt und materialsparend konstruiert sind. Allen Ausgestaltungen ist gemein, dass zumindest ein Endstück des Verbindungselementes in der Form von zweiten Schaltkontakten ausgebildet ist, die als Gegenkontakte zu den ersten Schaltkontakten wirken und die zum Stromschluss mit dem gemeinsamen Hochspannungs-Abgangsanschluss die beweglichen Schaltelemente der Trennschalter direkt kontaktieren. Durch die Maßnahmen wird die Anzahl an erforderlichen Isolatoren verringert und die Bauhöhe beträchtlich reduziert.

Ein erstes Ausführungsbeispiel der Erfindung, bei dem die Anzahl der benötigten Isolatoren um zwei verringert werden konnte und die Gesamtbauhöhe nur etwa 8,4 m beträgt, zeigen die Figur 2a in der Gesamtansicht und die Figur 2b in einer Teilansicht. Gegenüber den herkömmlichen Konstruktionen (vergl. Figur 1), fallen bei der in den Figuren 2a und 2b dargestellten Ausführung besonders folgende Merkmale auf:

Das Verbindungselement V1 des gemeinsamen Abgangsanschlusses A1 besteht aus einen starren Stromleiterprofil, an dessen beiden Enden jeweils ein Schaltkontakt GK1 und GK1' angeordnet ist, die als Gegenkontakte zu den oberen Schaltkontakten K bzw. K' wirken. Das starre Verbindungselement V1 ist an dem Isolator IA montiert und dient demnach sowohl als gemeinsamer Stromleiter wie auch als Gegenkontaktelement für die beiden Trennschalter T1 und T1'. Durch diese Maßnahmen können die beiden unteren Isolatoren (vergl. Iu in Figur 1) entfallen, sodass jeder Trennschalter nur noch zwei Isolatoren Io und Im aufweist. Die aus Trennschaltern und Abgangsanschluss gebildete Konstruktion benötigt daher lediglich fünf statt der üblichen sieben Isolatoren. Außerdem reduziert sich die Bauhöhe bei Spannungsebene 110/123 kV um etwa 2 m, sodass auch ein verkürzter Hauptstützträger H* verwendet werden kann.

In der Figur 2b ist ein Ausschnitt der Schaltanlage zu sehen, um die Konstruktion des neuen Abgangsanschlusses genau darzustellen. Das starre Verbindungselement V1 hat jeweils an einem seiner beiden Enden die Form eines Gegenkontaktes GK1', der an die Kontaktfäche des Schaltelementes SE' angepaßt ist. Beim Schließen des Schalters, d.h. beim Drehen des Schalthebels SE' in die Schließstellung, greifen die Kontaktflächen ineinander und schalten den Stromfluß auf der jeweiligen Trennstrecke. Die neue Konstruktion entspricht einer kompakten Integration von Trennschaltern und Abgangsanschluss, wobei für jede Trennstrecke ein Isolator weniger benötigt wird. Nicht nur die Bauhöhe des Hauptträgers H* wird reduziert - auch der Grundrahmen G wird verkleinert. Insgesamt wird viel Material eingespart, wobei keine Beeinträchtigung in der Funktionsweise und in den Sicherheitsanforderungen hingenommen werden muss. Die Trennschalter T und T' können mit Einzelantrieben oder mit einem gemeinsamen gegenläufig arbeitenden Antrieb versehen werden (hier nicht dargestellt). Weiterhin ist auch der sammelschienenseitige Anbau von mechanischen, motor- oder handbetriebenen Erdungsschaltern möglich.

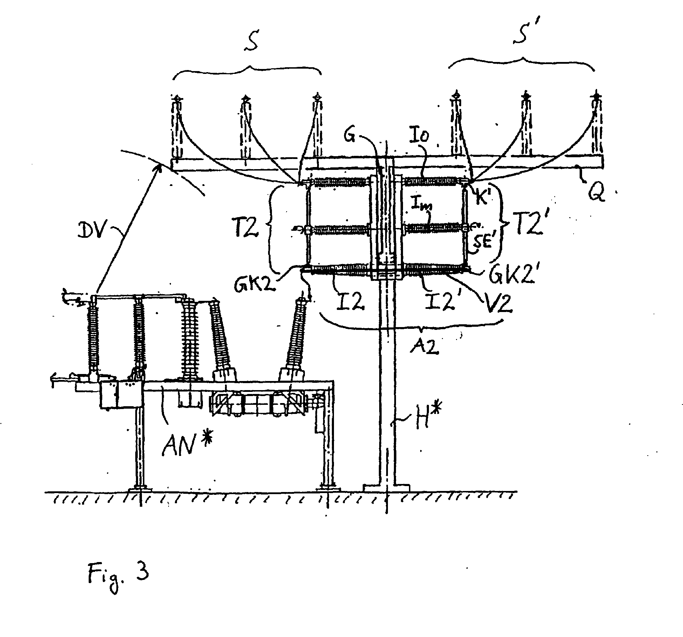

Die Figur 3 zeigt als weiteres Ausführungsbeispiel eine zweite Bauform, bei der ein Isolator entfallen kann, nämlich derjenige, der das Verbindungselement trägt (vergl. IA in Figur 1 oder in Figuren 2a/b). Diese in der Figur 3 dargestelte Bauform hat bei Spannungsebene 110/123 kV eine auf etwa 8,6 m verringerte Bauhöhe. In diesem Beispiel ist der gemeinsame Abgangsanschluss A2 durch einen inneren Stromleiter realisiert, der durch die unteren Isolatoren der Trennschalter hindurchgeführt ist und als Verbindungselement V2 wirkt. Auch dieses Verbindungselement V2 hat an seinen beiden Enden jeweils einen Schaltkontakt GK2 und GK2', die als Gegenschaltkontakte wirken. Diese Konstruktion entspricht im Wesentlichen einer kompakten Integration des Verbindungselementes V2 in die unteren Isolatoren I2 und I2 der Trennschalter T2 bzw. T2'. Deshalb wird auch kein Mittelstütz-Isolator für den Abgangsanschluss benötigt, wodurch wiederum die Gesamtbauhöhe der Anlage unter Einhaltung der erforderlichen Sicherheitsabstände DV auf immerhin nur 8,6 m bei Spannungsebene 110/123 kV verringert werden kann. Diese neue Bauart nach der Figur 3 ist besonders gut geeignet, mit dem Grundrahmen G in Schaltzellentrennwände von luftisolierten Innenraumanlagen eingesetzt zu werden.

Bei den Bauformen nach den Figuren 2a,b und 3 sind die Trennschalter mit ihren Grundrahmen senkrecht "Rücken an Rücken" montiert, wobei der Grundrahmen an einem Hauptstützträger befestigt ist.

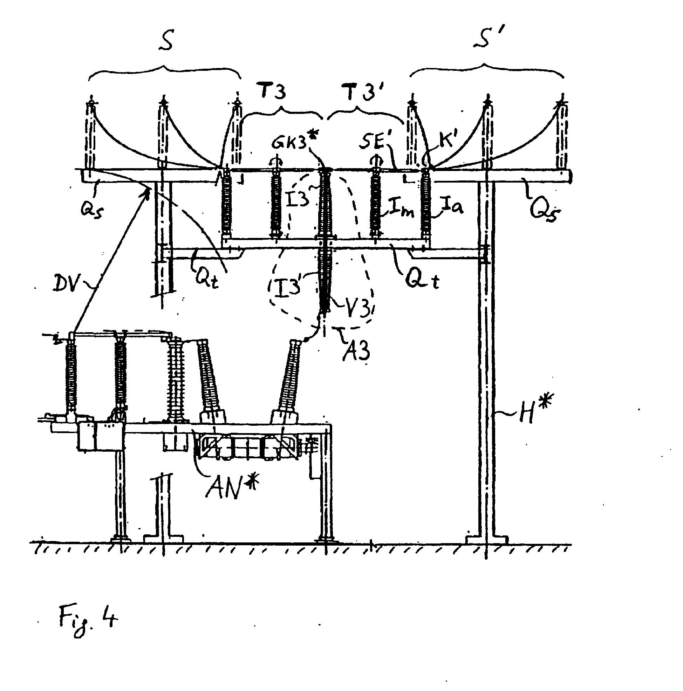

In der Figur 4 ist eine dritte neue Bauform dargestellt, bei der die Trennschalter T3 und T3'eine Trennschaltereinheit bilden und direkt nebeneinander mit ihren Grundrahmen waagerecht in "Kiellinien-Form" montiert sind, wobei zwei Hauptstützträger verwendet werden. Die Gesamtbauhöhe reduziert sich hier bei Spannungsebene 110/123 kV auf ca. 9 m. Die Trägerkonstruktion hat zwei vertikal stehende Hauptstützträger H* mit jeweils einem unteren Querträger Qt und einem oberen Querträger Qs aufweist. Die Sammelschienen S und S' sind jeweils auf einem der oberen Querträger Qs montiert. Die direkt nebeneinander angeordneten Trennschalter T3 und T3' sind mit vertikal aufgerichteten Isolatoren Ia, Im und I3 ausgestattet, die auf einem Grundrahmen G montiert sind, der zwischen den Haupträgern H* waagerecht angeordnet und an den unteren Querträgern Qt montiert ist. Jeder Trennschalter T3 oder T3' hat einen äußeren Isolator Ia, der den ersten Schaltkontakt K bzw. K' trägt sowie einen mittleren Isolator Im, an dem das Schaltelement SE bzw. SE' drehbar gelagert ist. Außerdem gibt es noch einen Isolator I3, der einen gemeinsamen Schaltkontakt GK3* trägt, der als Gegenkontakt für beide Schaltkontakte K und K' wirkt, d.h. der also einem Doppelgegenkontakt entspricht. Das gezeigte Konstruktionsprinzip ist auch auf andere Trennschaltertypen anwendbar, wie z.B. auf Schwenktrennschalter oder Hebeltrennschalter, insbesondere auf vertikale Semi-Pantographen. Dasselbe gilt auch für die zuvor beschriebenen Ausführungsformen nach den Figuren 2a,b und 3.

Die Erfindung ist nicht nur auf eine ganze Schaltanlage gerichtet, sondern auch auf einzelne Komponenten wie Schaltgerät und Trennschalter. Neben den oben beschriebenen Ausführungen sind noch zahlreiche Varianten denkbar, insbesondere solche, die durch Kombination der beschriebenen Merkmale entstehen.

## Patentansprüche

1. Hochspannungs-Schaltanlage mit mindestens zwei Trennschaltern (T, T'), die auf einer Trägerkonstruktion (H, Q) für Sammelschienen (S, S') angeordnet sind und die jeweils ein bewegliches Schaltelement (SE) und einen damit direkt kontaktierenden ersten Schaltkontakt (K) aufweisen, zum Stromschluss mit einer der Sammelschienen (S, S'), und mit einem gemeinsamen Hochspannungs-Abgangsanschluss (A), der ein stromleitendes Verbindungselement (V) aufweist, das die mindestens zwei Trennschalter (T, T') mit nicht auf der Trägerkonstruktion (H, Q) angeordneten Anlageteilen (AN) verbindet, **dadurch gekennzeichnet, dass** zumindest ein Endstück des Verbindungselements (V1; V2; V3) in der Form von zweiten Schaltkontakten (GK1, GK1'; GK2, GK2'; GK3*) ausgebildet ist, die als Gegenkontakte zu den ersten Schaltkontakten (K, K') wirken und die zum Stromschluss mit dem gemeinsamen Hochspannungs-Abgangsanschluss (A1, A2, A3) die beweglichen Schaltelemente (SE, SE') der Trennschalter (T1, T1'; T2, T2'; T3, T3') direkt kontaktieren.

2. Hochspannungs-Schaltanlage nach Anspruch 1, **dadurch gekennzeichnet, dass**
das Verbindungselement (V1) starr ist und aus einem Stromleiterprofil gebildet ist, dessen beiden Endstücke als zweite Schaltkontakte (GK1, GK1') geformt sind zum direkten Kontaktieren mit den beweglichen Schaltelementen (SE, SE') der Trennschalter (T1, T1'), oder an den Enden des Verbindungselements angebaute Kontaktsysteme vorhanden sind.

3. Hochspannungs-Schaltanlage nach Anspruch 2, **dadurch gekennzeichnet, dass**
jeder der Trennschalter ein Drehtrennschalter (T1') ist, der nur mit zwei Isolierkörpern (Io, Im) an der Trägerkonstruktion (H*, Q) befestigt ist, wobei der eine Isolierkörper (Im) das bewegliche Schaltelement (SE') und der andere Isolierkörper (Io) den ersten Schaltkontakt (K) des jeweiligen Drehtrennschalters (T1') trägt, und dass der Hochspannungs-Abgangsanschluss (A1) an der Trägerkonstruktion (H*, Q) mittels eines Isolierkörpers (IA) befestigt ist, der das starre Verbindungselement (V1) und auch die zweiten Schaltkontakte (GK1, GK1') für die Trennschalter (T1, T1') trägt.

4. Hochspannungs-Schaltanlage nach Anspruch 1, **dadurch gekennzeichnet, dass**
der Hochspannungs-Abgangsanschluss (A2) aus zwei gegensinnig zueinander angeordneten und an der Trägerkonstruktion (H*, Q) befestigten Isolierkörpern (I2; I2') besteht, durch die das Verbindungselement (V2) von dem Ende des einen Isolierkörpers (12) zu dem Ende des anderen Isolierkörpers (12') innen hindurchgeführt ist, wobei beide Enden des Verbindungselements (V2) als zweite Schaltkontakte (GK2, GK2') zum direkten Kontaktieren mit den beweglichen Schaltelementen (SE, SE') der Trennschalter (T2, T2') ausgebildet sind, und dass jeder der Trennschalter ein Drehtrennschalter (T2') ist, der nur mit zwei Isolierkörperen (Io, Im) an der Trägerkonstruktion (H*, Q) befestigt ist, wobei der eine Isolierkörper (Im) das bewegliche Schaltelement (SE') und der andere Isolierkörper (Io) den ersten Schaltkontakt (K') des jeweiligen Drehtrennschalters (T2') trägt.

5. Hochspannungs-Schaltanlage nach einem der Ansprüche 2 bis 4, **dadurch gekennzeichnet, dass** die Trägerkonstruktion einen vertikal stehenden Hauptstützträger (H*) und einen darauf montierten Querträger (Q) aufweist, dass die Sammelschienen (S, S') mit Isolatoren auf dem Querträger (Q) montiert sind und dass die Trennschalter (T1, T1') jeweils rückseitig gegeneinander gerichtet auf einem Grundrahmen (G) montiert sind, der an dem Hauptstützträger (H*) unterhalb des Querträgers (Q) montiert ist.

6. Hochspannungs-Schaltanlage nach Anspruch 1, **dadurch gekennzeichnet, dass**
der Hochspannungs-Abgangsanschluss (A3) aus zwei gegensinnig zueinander angeordneten und an der Trägerkonstruktion (H*, Qs, Qt) befestigten Isolierkörpern (13; I3') besteht, durch die das Verbindungselement (V3) von dem Ende des einen Isolierkörpers (I3) zu dem Ende des anderen Isolierkörpers (I3') innen hindurchgeführt ist, wobei ein Ende des Verbindungselements (V3) als gemeinsamer zweiter Schaltkontakt (GK3*) zum direkten Kontaktieren mit den beweglichen Schaltelementen (SE, SE') der mindestens zwei Trennschalter (T3, T3') ausgebildet ist, und dass jeder der Trennschalter ein Drehtrennschalter (T3') ist, der nur mit zwei Isolierkörperen (Ia, Im) an der Trägerkonstruktion (H*, Qs, Qt) befestigt ist, wobei der eine Isolierkörper (Im) das bewegliche Schaltelement (SE') und der andere Isolierkörper (Ia) den ersten Schaltkontakt (K') des jeweiligen Drehtrennschalters (T3') trägt.

7. Hochspannungs-Schaltanlage nach Anspruch 4 oder 6,
**dadurch gekennzeichnet, dass**
das Verbindungselement (V2; V3) ein Stromkabel oder leitendes Seil ist.

8. Hochspannungs-Schaltanlage nach Anspruch 6, **dadurch gekennzeichnet, dass**
die Trägerkonstruktion zwei vertikal stehende Hauptstützträger (H*) mit mindestens einem unteren Querträger (Qt) und einem oberen Querträger (Qs) aufweist, dass die Sammelschienen (S, S') jeweils auf einem der oberen Querträger (Qs) montiert sind und dass die Trennschaltereinheit (T3, T3') direkt nebeneinander auf einem Grundrahmen (G) montiert sind, der zwischen den Haupträgern (H*) waagerecht angeordnet und an den unteren Querträgern (Qt) montiert ist.

9. Trennschalter (T1') für eine Hochspannungs-Schaltanlage, der zusammen mit mindestens einem weiteren Trennschalter (T1) auf einer Trägerkonstruktion (H*, Q) für Sammelschienen (S, S') angeordnet ist und der ein bewegliches Schaltelement (SE') und einen damit direkt kontaktierenden ersten Schaltkontakt (K') aufweist zum Stromschluss mit einer der Sammelschienen (S'), wobei die Hochspannungs-Schaltanlage einem gemeinsamen Hochspannungs-Abgangsanschluss (A1) hat, der ein stromleitendes Verbindungselement (V1) aufweist, das die Trennschalter (T1, T1') mit nicht auf der Trägerkonstruktion (H*, Q) angeordneten Anlageteilen (AN*) verbindet, **dadurch gekennzeichnet, dass**
ein Endstück des Verbindungselements (V1) in den Trennschalter (T1') integriert ist und in der Form eines zweiten Schaltkontaktes (GK1') ausgebildet ist, der als Gegenkontakte zu dem ersten Schaltkontakt (K') wirkt und der zum Stromschluss mit dem gemeinsamen Hochspannungs-Abgangsanschluss (A1) das bewegliche Schaltelement (SE') des Trennschalters (T1') direkt kontaktiert.

10. Trennschalter (T1') nach Anspruch 8, **dadurch gekennzeichnet, dass**
der Trennschalter ein Drehtrennschalter (T1'), insbesondere ein Mehrsäulendrehtrennschalter, ein Schwenktrennschalter oder ein Hebeltrennschalter, insbesondere ein Gelenkhebeltrennschalter, ist.

11. Schaltgerät für eine Hochspannungs-Schaltanlage, mit mindestens zwei Trennschaltern (T1, T1'), die zusammen auf einer Trägerkonstruktion (H*, Q) für Sammelschienen (S, S') angeordnet ist und die jeweils ein bewegliches Schaltelement (SE') und einen damit direkt kontaktierenden ersten Schaltkontakt (K') aufweisen zum Stromschluss mit einer der Sammelschienen (S'), wobei die Hochspannungs-Schaltanlage einem gemeinsamen Hochspannungs-Abgangsanschluss (A1) hat, der ein stromleitendes Verbindungselement (V1) aufweist, das die Trennschalter (T1, T1') mit nicht auf der Trägerkonstruktion (H*, Q) angeordneten Anlageteilen (AN*) verbindet, **dadurch gekennzeichnet, dass** ein Endstück des Verbindungselements (V1) in den jeweiligen Trennschalter (T1') integriert ist und in der Form eines zweiten Schaltkontaktes (GK1') ausgebildet ist, der als Gegenkontakte zu dem ersten Schaltkontakt (K') wirkt und der zum Stromschluss mit dem gemeinsamen Hochspannungs-Abgangsanschluss (A1) das bewegliche Schaltelement (SE') des Trennschalters (T1') direkt kontaktiert.

## Claims

1. A high-voltage switching installation, having at least two isolating switches (T, T') which are arranged on a support structure (H, Q) for bus bars (S, S') and each of which has a movable switching element (SE) and a first switching contact (K) which contacts it directly for closing a circuit with one of the bus bars (S, S'), and with a common high-voltage output connector (A) having a current-conducting connecting element (V), which connects the at least two isolating switches (T, T') with installation elements (AN), which are not arranged on the support structure (H, Q), **characterized in that** at least one end piece of the connecting element (V1, V2, V3) is embodied in the manner of a second switching contact (GK1, GK1', GK2, GK2', GK3*), which act as countercontacts in respect to the first switching contacts (K, K') and which, for closing the contact with the common high- voltage output connector (A1, A2, A3), directly contact the movable switching elements (SE, SE') of the isolating switches (T, T', T2, T2', T3, T3').

2. The high-voltage switching installation in accordance with claim 1, **characterized in that**
the connecting element (V1) is rigid and has been formed from a profiled current conductor, whose two end pieces are formed as second switching contacts (GK1, GK1') for making direct contact with the movable switching elements (SE, SE') of the isolating switches (T1, T1'), or that contact systems are provided, which are installed on the ends of the connecting element.

3. The high-voltage switching installation in accordance with claim 2, **characterized in that**
each one of the isolating switches is a rotary isolating switch (T1'), which is fastened to the support structure (H*, Q) by only two insulation bodies (Io, Im), wherein the one insulation body (Im) supports the movable switching element (SE'), and the other insulation body (Io) supports the first switching contact (K) of the respective rotary isolating switch (T1'), and that the high-voltage output connector (A1) is fastened on the support structure (H*, Q) by means of an insulation body (IA), which supports the rigid connecting element (V1) and also the second switching contacts (GK1, GK1') for the isolating switches (T1, T1').

4. The high-voltage switching installation in accordance with claim 1, **characterized in that**
the high-voltage output connector (A2) consists of two insulation bodies (I2, I2'), which are arranged in opposite directions to each other and fastened on the support structure (H*, Q), through which the connecting element (V2) is passed on the inside from the end of the one insulation body (I2) to the end of the other insulation body (I2'), wherein both ends of the connecting element (V2) are embodied for direct contacting of the movable switching elements (SE, SE') of the isolating switches (T2, T2'), and that each one of the isolating switches is a rotary isolating switch (T2'), which is fastened on the support structure (H*, Q) by means of only two insulation bodies (Io, Im), wherein the one insulation body (Im) supports the movable switching element (SE'), and the other insulation body (Io) supports the first switching contact (K') of the respective rotary isolating switch (T2').

5. The high-voltage switching installation in accordance with one of claims 2 to 4, **characterized in that**
the support structure has a vertically extending main support beam (H*) and a cross beam (Q) mounted thereon, that the bus bars (S, S') are mounted by means of insulators on the cross beam (Q), and that the isolating switches (T1, T1') are mounted, respectively oriented toward each other with their backs, on a base frame (G), which is mounted on the main support beam (H*) below the cross beam (Q).

6. The high-voltage switching installation in accordance with claim 1, **characterized in that**
the high-voltage output connector (A3) consists of two insulation bodies (I2, I2'), which are arranged in opposite directions to each other and fastened on the support structure (H*, Qs, Qt), through which the connecting element (V3) is passed on the inside from the end of the one insulation body (I3) to the end of the other insulation body (I3'), wherein one end of the connecting element (V3) is embodied as a common second switching contact (GK3*) for direct contacting of the movable switching elements (SE, SE') of the at least two isolating switches (T3, T3'), and that each one of the isolating switches is a rotary isolating switch (T3'), which is fastened on the support structure (H*, Qs, Qt) by means of only two insulation bodies (Ia, Im), wherein the one insulation body (Im) supports the movable switching element (SE'), and the other insulation body (Ia) supports the first switching contact (K') of the respective rotary isolating switch (T3').

7. The high-voltage switching installation in accordance with claim 4 or 6, **characterized in that** the connecting element (V2, V3) is an electrical cable or conductive cable.

8. The high-voltage switching installation in accordance with claim 6, **characterized in that**
the support structure has two vertically extending main support beams (H*) with at least one lower cross beam (Qt) and an upper cross beam (Qs), that the bus bars (S, S') are respectively mounted on one of the upper cross beams (Qs), and that the isolating switch units (T3, T3') are mounted directly next to each other on a base frame (G), which is horizontally arranged between the main beams (H*) and mounted on the lower cross beam (Qt).

9. An isolating switch (T') for a high-voltage switching installation which, together with at least one further isolating switch (T), is arranged on a support structure (H*, Q) for bus bars (S, S') and which has a movable switching element (SE') and a first switching contact (K') which contacts it directly, for closing a circuit with one of the bus bars (S'), wherein the high- voltage switching installation has a common high-voltage output connector (A1), which has a current-conducting connecting element (V1), which connects the isolating switches (T, T') with installation elements (AN*), which are not arranged on the support structure (H, Q), **characterized in that** an end piece of the connecting element (V1) has been integrated into the isolating switch (T1') and is embodied in the shape of a second switching contact (GK1'), which acts as counter-contact in respect to the first switching contact (K') and which, for closing the contact with the common high-voltage output connector (A1), directly contacts the movable switching element (SE') of the isolating switches (T').

10. The isolating switch (T') in accordance with claim 8,
**characterized in that**
the isolating switch is a rotary isolating switch (T1'), in particular a multi-column rotary isolating switch, a pivoting isolating switch or a lever isolating switch, in particular an articulated lever isolating switch.

11. A switching apparatus for a high-voltage switching installation, having at least two isolating switches (T, T1'), which are arranged together on a support structure (H*, Q) for bus bars (S, S') and each of which has a movable switching element (SE') and a first switching contact (K') which contacts it directly, for closing a circuit with one of the bus bars (S'), wherein the high-voltage switching installation has a common high- voltage output connector (A1), which has a current-conducting connecting element (V1), which connects the isolating switches (T, T') with installation elements (AN*), which are not arranged on the support structure (H*, Q), **characterized in that** an end piece of the connecting element (V1) has been integrated into the respective isolating switch (T1') and is embodied in the shape of a second switching contact (GK1'), which acts as counter-contact in respect to the first switching contact (K') and which, for closing the contact with the common high-voltage output connector (A1), directly contacts the movable switching element (SE') of the isolating switches

## Revendications

1. Installation de commutation haute tension comprenant au moins deux sectionneurs (T, T') qui sont agencés sur une structure de support (H, Q) pour barres collectrices (S, S') et qui présentent chacun un élément de commutation mobile (SE) et un premier contact de commutation (K) établissant un contact direct avec celui-ci, pour la connexion électrique avec une des barres collectrices (S, S'), et comprenant un raccord de sortie haute tension commun (A), lequel présente un élément de liaison conducteur (V) qui relie les au moins deux sectionneurs (T, T') à des parties d'installation (AN) non agencées sur la structure de support (H, Q), **caractérisée en ce qu'**au moins une extrémité de l'élément de liaison (V1; V2; V3) est réalisée sous la forme de deuxièmes contacts de commutation (GK1, GK1'; GK2, GK2'; GK3*) qui fonctionnent en tant que contacts opposés aux premiers contacts de commutation (K, K') et qui, pour la connexion électrique avec le raccord de sortie haute tension commun (A1, A2, A3), établissent le contact direct avec les éléments de commutation mobiles (SE, SE') des sectionneurs (T1, T1'; T2, T2'; T3, T3').

2. Installation de commutation haute tension selon la revendication 1, **caractérisée en ce que** l'élément de liaison (V1) est fixe et est formé d'un profilé conducteur dont les deux extrémités sont formées en tant que deuxièmes contacts de commutation (GK1, GK1') pour l'établissement de contact direct avec les éléments de commutation mobiles (SE, SE') des sectionneurs (T1, T1') ou bien il est prévu des systèmes de contact montés aux extrémités de l'élément de liaison.

3. Installation de commutation haute tension selon la revendication 2, **caractérisée en ce que** chacun des sectionneurs est un sectionneur rotatif (T1') qui est fixé sur la structure de support (H*, Q) uniquement avec deux corps isolants (Io, Im), l'un des corps isolants (Im) portant l'élément de commutation mobile (SE') et l'autre corps isolant (Io) portant le premier contact de commutation (K) du sectionneur rotatif (T1') correspondant, et **en ce que** le raccord de sortie haute tension (A1) est fixé sur la structure de support (H*, Q) au moyen d'un corps isolant (IA) qui porte l'élément de liaison fixe (V1) ainsi que les deuxièmes contacts de commutation (GK1, GK1') pour les sectionneurs (T1, T1').

4. Installation de commutation haute tension selon la revendication 1, **caractérisée en ce que** le raccord de sortie haute tension (A2) est composé de deux corps isolants (I2, I2') agencés à l'opposé l'un de l'autre et fixés sur la structure de support (H*, Q), traversés, à l'intérieur, par l'élément de liaison (V2) depuis l'extrémité d'un corps isolant (I2) jusqu'à l'extrémité de l'autre corps isolant (I2'), les deux extrémités de l'élément de liaison (V2) étant réalisées sous la forme de deuxièmes contacts de commutation (GK2, GK2') pour établir le contact direct avec les éléments de commutation mobiles (SE, SE') des sectionneurs (T2, T2') et **en ce que** chacun des sectionneurs est un sectionneur rotatif (T2') qui est fixé sur la structure de support (H*, Q) uniquement avec deux corps isolants (Io, Im), l'un des corps isolants (Im) portant l'élément de commutation mobile (SE') et l'autre corps isolant (Io) portant le premier contact de commutation (K') du sectionneur rotatif (T2') correspondant.

5. Installation de commutation haute tension selon l'une des revendications 2 à 4, **caractérisée en ce que** la structure de support présente une poutre support principale (H*) verticale et une poutre transversale (Q) montée dessus, **en ce que** les barres collectrices (S, S') sont montées sur la poutre transversale (Q) avec des isolants et **en ce que** les sectionneurs (T1, T1') sont montés adossés l'un à l'autre sur un cadre de base (G) qui est monté sur la poutre support principale (H^{*}) au-dessous de la poutre transversale (Q).

6. Installation de commutation haute tension selon la revendication 1, **caractérisée en ce que** le raccord de sortie haute tension (A3) est composé de deux corps isolants (I3, 13') disposés à l'opposé l'un de l'autre et fixés sur la structure de support (H*, Qs, Qt), traversés, à l'intérieur, par l'élément de liaison (V3) depuis l'extrémité d'un corps isolant (I3) jusqu'à l'extrémité de l'autre corps isolant (I3'), une extrémité de l'élément de liaison (V3) étant réalisée sous la forme de deuxième contact de commutation commun (GK3*) pour établir le contact direct avec les éléments de commutation mobiles (SE, SE') des au moins deux sectionneurs (T3, T3'), et **en ce que** chacun des sectionneurs est un sectionneur rotatif (T3') qui est fixé sur la structure de support (H*, Qs, Qt) uniquement avec deux corps isolants (Ia, Im), l'un des corps isolants (Im) portant l'élément de commutation mobile (SE') et l'autre corps isolant (Ia) portant le premier contact de commutation (K') du sectionneur rotatif (T3') correspondant.

7. Installation de commutation haute tension selon la revendication 4 ou 6, **caractérisée en ce que** l'élément de liaison (V2; V3) est un câble électrique ou un câble conducteur.

8. Installation de commutation haute tension selon la revendication 6, **caractérisée en ce que** la structure de support présente deux poutres supports principales (H*) verticales avec au moins une poutre transversale inférieure (Qt) et une poutre transversale supérieure (Qs), **en ce que** les barres collectrices (S, S') sont montées chacune sur l'une des poutres transversales supérieures (Qs) et **en ce que** l'ensemble des sectionneurs (T3, T3') sont montés directement l'un à côté de l'autre sur un cadre de base (G) qui est disposé horizontalement entre les poutres principales (H*) et monté sur les poutres transversales inférieures (Qt).

9. Sectionneur (T1') pour une installation de commutation haute tension qui est agencé conjointement avec au moins un autre sectionneur (T1) sur une structure de support (H*, Q) pour barres collectrices (S, S') et qui présente un élément de commutation mobile (SE') et un premier contact de commutation (K') établissant le contact direct avec celui-ci pour la connexion électrique avec une des barres collectrices (S'), l'installation de commutation haute tension ayant un raccord de sortie haute tension commun (A1), lequel présente un élément de liaison conducteur (V1) qui relie les sectionneurs (T1, T1') à des parties d'installation (AN*) non agencées sur la structure de support (H*, Q), **caractérisé en ce qu'**une extrémité de l'élément de liaison (V1) est intégrée dans le sectionneur (T1') et est réalisée sous la forme d'un deuxième contact de commutation (GK1') qui fonctionne en tant que contact opposé au premier contact de commutation (K') et qui, pour la connexion électrique avec le raccord de sortie haute tension commun (A1), établit le contact direct avec l'élément de commutation mobile (SE') du sectionneur (T1').

10. Sectionneur (T1') selon la revendication 8, **caractérisé en ce que** le sectionneur est un sectionneur rotatif (T1'), en particulier un sectionneur rotatif à plusieurs colonnes, un sectionneur pivotant ou un sectionneur à levier, en particulier un sectionneur à levier articulé.

11. Appareil de commutation pour une installation de commutation haute tension comprenant au moins deux sectionneurs (T1, T1') qui sont agencés ensemble sur une structure de support (H*, Q) pour barres collectrices (S, S') et qui présentent chacun un élément de commutation mobile (SE') et un premier contact de commutation (K') établissant un contact direct avec celui-ci pour la connexion électrique avec une des barres collectrices (S'), l'installation de commutation haute tension ayant un raccord de sortie haute tension commun (A1), lequel présente un élément de liaison conducteur (V1) qui relie les sectionneurs (T1, T1') à des parties d'installation (AN*) non agencées sur la structure de support (H*, Q), **caractérisé en ce qu'**une extrémité de l'élément de liaison (V1) est intégrée dans le sectionneur (T1') correspondant et est réalisée sous la forme d'un deuxième contact de commutation (GK1') qui fonctionne en tant que contact opposé au premier contact de commutation (K') et qui, pour la connexion électrique avec le raccord de sortie haute tension commun (A1), établit le contact direct avec l'élément de commutation mobile (SE') du sectionneur (T1').
